Europäisches Patentamt

European Patent Office

Office européen des brevets

(11) Veröffentlichungsnummer: **0 275 001**
B1

# EUROPÄISCHE PATENTSCHRIFT

(45) Veröffentlichungstag der Patentschrift:
18.07.90

(51) Int. Cl.⁵: **B65D 19/44**, F16B 37/04

(21) Anmeldenummer: **87890254.3**

(22) Anmeldetag: **12.11.87**

(54) Transportgestell für Karosseriebestandteile.

(30) Priorität: **13.01.87  AT 52/87**

(43) Veröffentlichungstag der Anmeldung:
**20.07.88 Patentblatt 88/29**

(45) Bekanntmachung des Hinweises auf die Patenterteilung:
**18.07.90 Patentblatt 90/29**

(84) Benannte Vertragsstaaten:
**CH DE FR GB IT LI NL SE**

(56) Entgegenhaltungen:
**WO-A-86/02056**
**DE-U- 8 531 890**
**FR-A- 1 535 511**
**FR-A- 2 161 432**
**US-A- 2 380 379**

(73) Patentinhaber: **Austria Metall Aktiengesellschaft,
A-5282 Braunau am Inn(AT)**

(72) Erfinder: **Falk, Friedrich, Mozartstrasse 56,
A-5282 Braunau am Inn(AT)**

(74) Vertreter: **Hain, Leonhard, Dipl.-Ing., Tal 18/IV,
D-8000 München 2(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Transportgestell für Karosseriebestandteile od.dgl. Blechstanzteile gemäß dem Oberbegriff des Patentanspruches 1.

Bei vielen Profilkonstruktionen ergibt sich die Notwendigkeit, vertikale Profile mit Querprofilen zu verbinden, wobei zudem eine stufenlose Verstellbarkeit wünschenswert ist. So weisen bei einem Bausatz zum Herstellen von Trag- und/oder Haltegerüsten (DE-U 8 531 890) die Profile an ihren Seitenflächen hinterschnittene Nuten auf. Darin sind Gleitstücke verschiebbar, die mittels in das Anschlußprofil eingreifenden Schrauben in der Nut festgezogen und dadurch die Profilverbindungen fixiert werden. Die Nuten sind von vom Hohlkastenprofil nach außen abstehenden Stegen mit nach einwärts gerichteten Schenkeln gebildet. Da die Schrauben von der Gleitstückseite her festzuziehen sind, sind verhältnismäßig tiefe Nuten erforderlich. Außerdem ist die Zugänglichkeit dieser Schrauben beschränkt. Auch die Ausbildung der Schraubgewinde in einer Profilkammer eines stumpf anschließenden Profiles ist aufwendig und kompliziert. Bei einer anderen Profilverbindung (FR-A 2 161 532) sind an den einwärtsstehenden Schenkeln der Nuten scharfkantige, etwa dreieckige, dem Gleitstück zugewandte Längsrippen vorhanden und das zugehörige Gleitstück ist so gewölbt, daß seine quer zur Nut verlaufenden Ränder wie scharfkantige Rippen wirken und beim Anziehen der Schrauben unter plastischer Verformung mit den Längsnuten zusammenwirken. Durch die Wölbung der aus einem härteren Material bestehenden Gleitstücke sind wiederum tiefere Nuten erforderlich, wodurch ebenfalls die Gleitfähigkeit der Gleitstücke beeinträchtigt wird. Es ist auch schon ein Stapelbehälter für Formteile, insbesondere Blechstanzteile, wie Fahrzeugtüren (WO-A 8 602 056), bekannt, der aus einem Rahmengestell mit oberen und unteren Aufnahmeleisten besteht, zwischen denen die Formteile stehend aufgenommen werden. Um die Formteile auch während des Transports sicher in ihrer Stellung zu halten, sind entlang der oberen Aufnahmeleisten noch höhenverstellbare Sicherungsleisten angeordnet, die zum Transport abgesenkt und zum Beladen und Entladen angehoben werden. Die Aufnahmeleisten weisen sägezahnartige Profilkerben zur Aufnahme der unteren und oberen Ränder der Formteile auf. Das Rahmengestell des Stapelbehälters ist aus Eckpfosten und nach innen vorspringenden Trägern gebildet. Zur Umstellung auf unterschiedliche Formteile sind die Aufnahmeleisten auswechselbar und/oder verstellbar. Dieses Transportgestell ist jedoch nur zur Aufnahme von Blechstanzteilen, wie Fahrzeugtüren, mit geradlinig verlaufenden oberen und unteren Rändern geeignet. Da das Rahmengestell sich lediglich aus einfachen Hohlkastenprofilen zusammensetzt, ist eine Verstellung der Profile allenfalls im beschränkten Umfang möglich.

Der Erfindung liegt daher die Aufgabe zugrunde, ein Transportgestell für Karosseriebestandteile od. dgl. Blechstanzteile zu schaffen, das sich durch einfache und vielseitige Verstellmöglichkeiten auszeichnet und dadurch auch Formteile mit unterschiedlicher Randgestaltung transportsicher aufnehmen kann.

Diese Aufgabe wird mit einem Transportgestell nach dem Oberbegriff des Patentanspruches 1 erfindungsgemäß durch die Kennzeichnungsmerkmale dieses Patentanspruches gelöst.

Vorteilhafte Weiterentwicklungen der Erfindung sind in Unteransprüchen beansprucht.

Dadurch, daß erfindungsgemäß die Profilsäulen und Querprofile mindestens entlang einer Seitenfläche eine hinterschnittene Nut mit verschiebbaren Gleitstücken aufweisen, die mittels am Anschlußprofil gelagerten Schrauben verschraubbar sind, lassen sich aus diesen vorgefertigten Profilen auf einfache Weise Transportgestelle zur Aufnahme sehr unterschiedlicher Formteile schaffen. Da die in Profilplatten gelagerten Schrauben gut zugänglich sind, können Verstellungen bzw. Umstellungen am Transportgestell leicht und rasch vorgenommen werden. Auch Aufnahmeleisten können in unterschiedlichen Höhen angebracht und so eine Halterung für die stehenden Ränder der Formteile geschaffen werden. Um die Feststellung dieser Profilverbindungen gegenüber größeren Beanspruchungen zu sichern, sind sowohl an den Gleitstücken als auch an den Nutenschenkeln scharfkantige dreiecksförmige Rippen zum gegenseitigen Eingriff vorgesehen. Trotz dieser Rippen an den Gleitstücken kann die Nutentiefe sehr niedrig gehalten werden und die planen Gleitstücke gewährleisten eine gute Verschiebbarkeit in den Nuten, ohne zu verkanten. Die vorgesehene Verbindungsart für die Profile ermöglicht zudem die Befestigung von zusätzlichen Stützarmen an den Profilsäulen zur Schaffung weiterer Seitenwandhalterungen für die Formteile.

Die Erfindung wird nachfolgend anhand eines Ausführungsbeispiels, das auch in der Zeichnung schematisiert dargestellt ist, näher beschrieben. Es zeigen:

Fig. 1 einen Querschnitt durch eine Stützsäule mit Anschlußprofil,

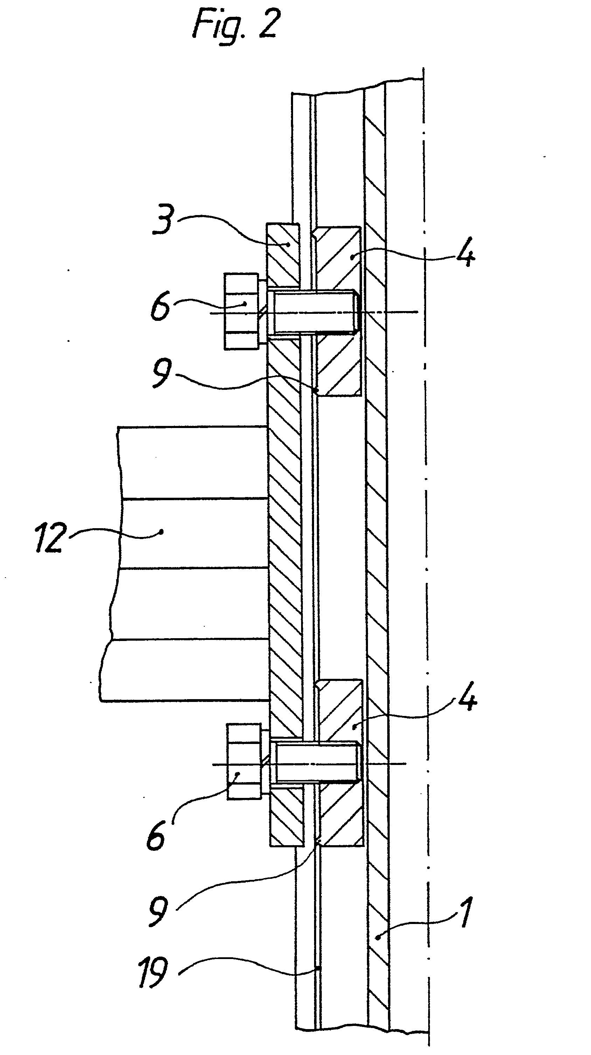

Fig. 2 einen Schnitt nach der Linie II–II der Fig. 1,
Fig. 3 eine Seitenansicht eines Transportgestelles,
Fig. 4 einen Vertikalschnitt und

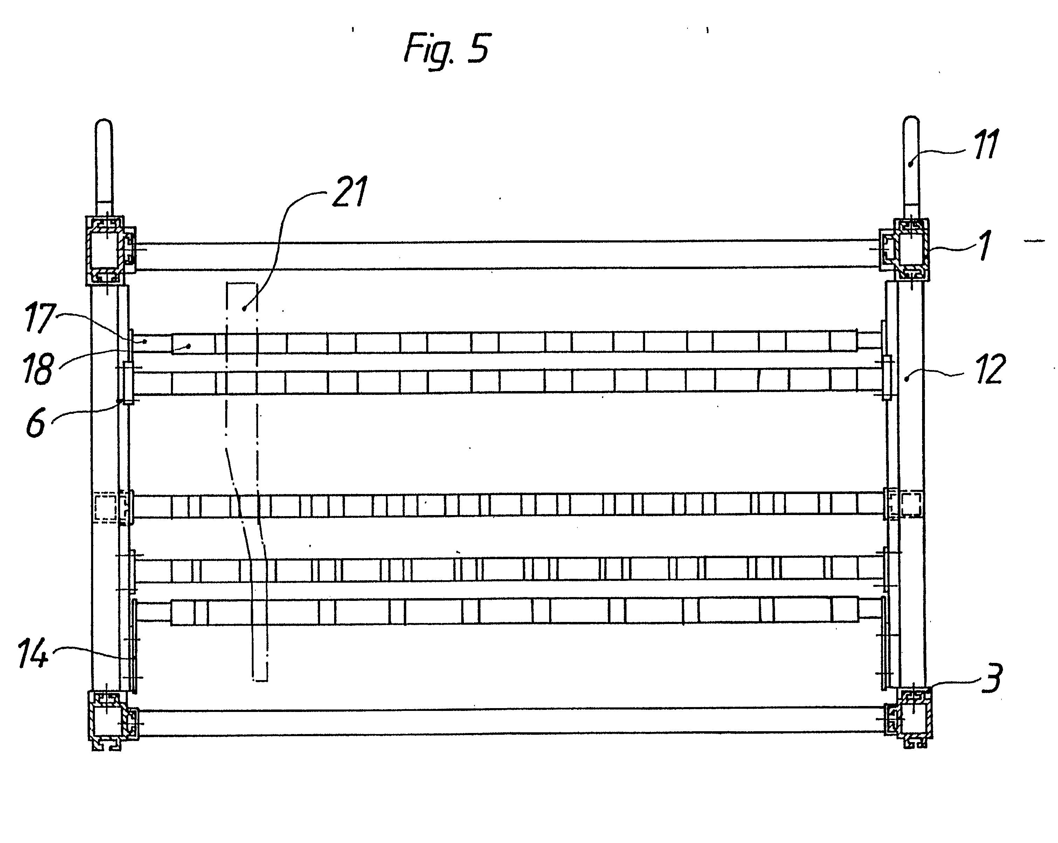

Fig. 5 einen Horizontalschnitt durch Fig. 3.

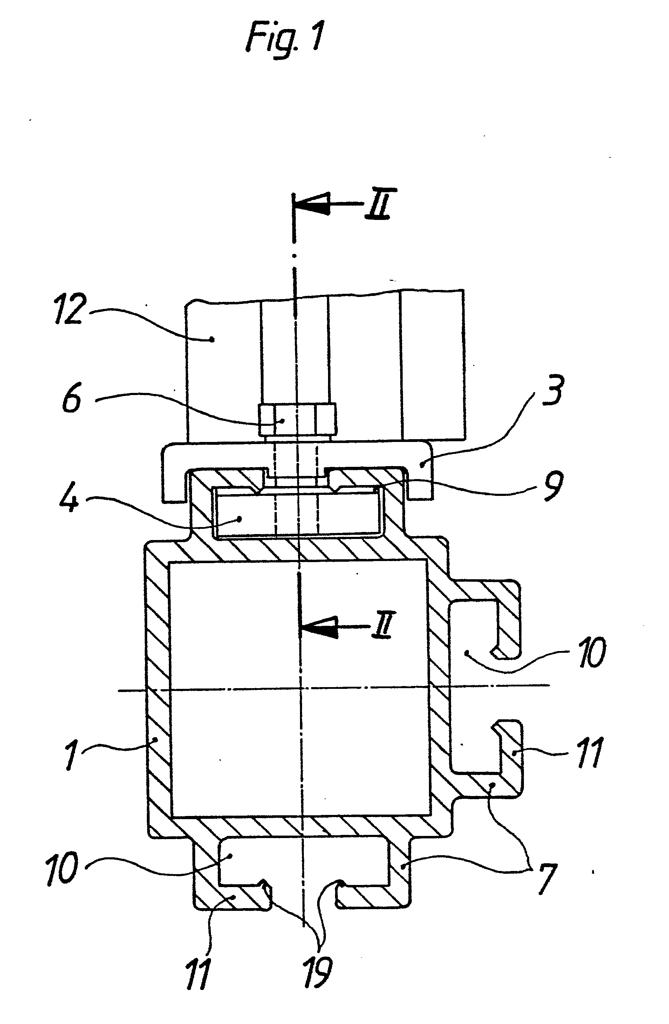

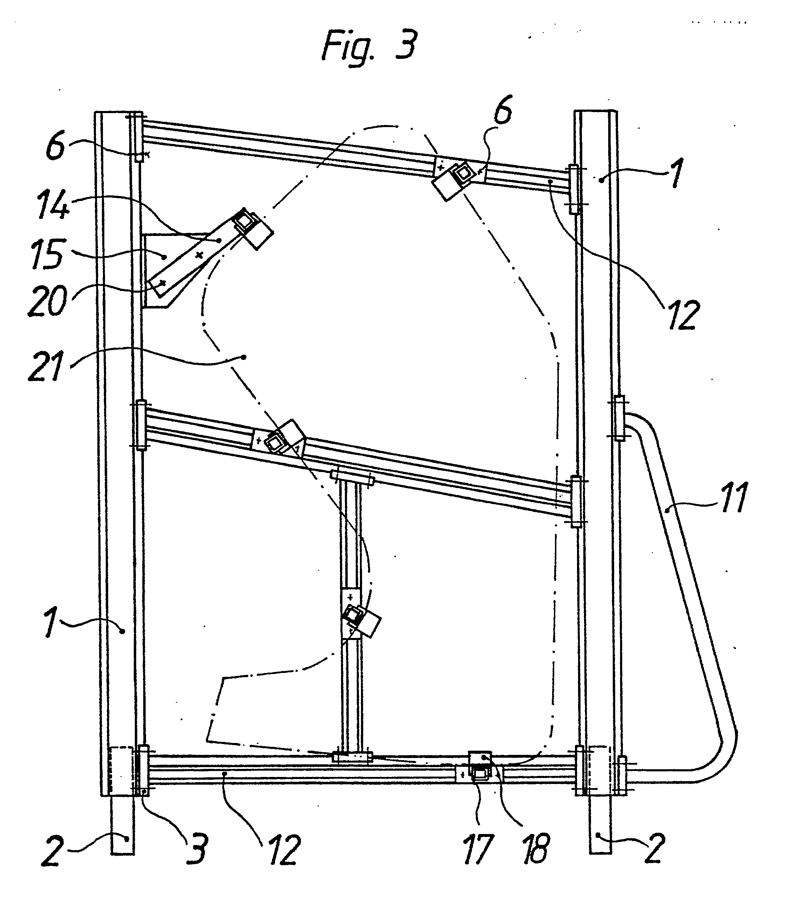

Wie Fig. 3 zeigt, besteht ein Gestell aus Hohlkasten-Profilsäulen 1, an die ebenfalls aus Hohlkastenprofilen bestehende Quer- bzw. Anschlußprofile 12 angeschlossen sind. Zur Verbindung besitzen alle Profile 1 und 12 (Fig. 1) T-Nuten 10, welche von nach außen vorstehenden Stegen 7 mit nach einwärts stehenden Scheneln 11 gebildet sind und somit T-förmige Nuten 10 begrenzen. In den Nuten 10 sind Gleitstücke 4 verschieblich angeordnet, die durch Schrauben 6, die in an den Enden der Anschlußprofile 12 vorgesehenen Profilplatten 3 gelagert sind, verschraubt werden können. Bei Einschrauben werden die Gleitstücke 4 gegen die umgebogenen Schenkel 11 gepreßt und dabei diese zwischen Gleitstück 4 und Profilplatte 3 eingeklemmt. Um diese Verbindung noch fester zu gestalten, weisen die Schenkel 11 der umgebogenen Stege 7 dem Gleitstück zugewandte, im Querschnitt etwa dreieckige Rippen 19 auf, die mit den dazu quer angeordneten, ähnlich geformten Rippen 9 der Gleitstücke 4 zusammenwirken, indem beim Anziehen der Schrauben 6 sich diese Rippen 9, 19 unter plastischer Verformung ineinanderpressen und dadurch die Verbindung nicht nur kraftschlüssig durch Reibung, sondern formschlüssig gestalten. Es können somit hohe Kräfte übertragen werden, ohne daß eine Verschiebung der Gleitstücke 4 in den Nuten 10 stattfindet.

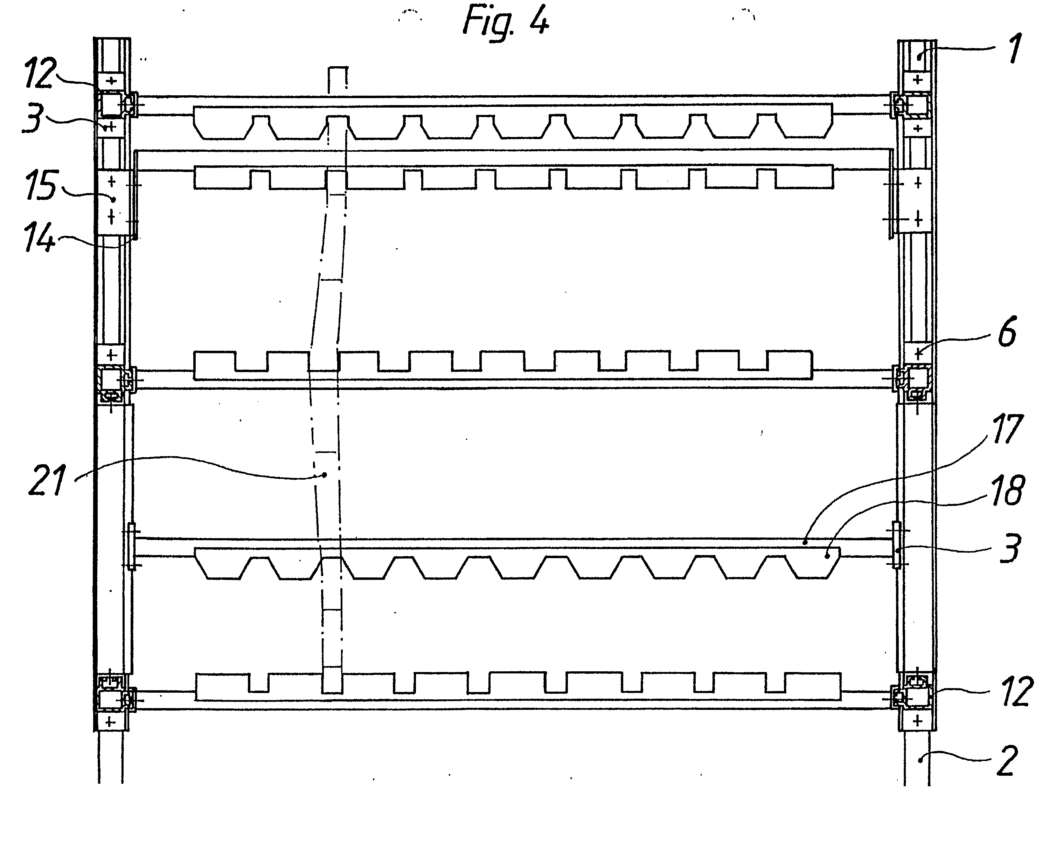

Es kann somit ein räumliches Fachwerk von Profilstäben baukastenförmig aufgebaut werden, wie das aus Fig. 3 erkennbare Transportgestell, bei dem die Profile entsprechend der Formgebung der zu lagernden Formteile zusammengebaut sind. Zur Auflagerung der Formteile, z.B. Autokarosseriebestandteile 21, sind Aufnahmeleisten 17 mit Auflagen 18 aus Kunststoff vorgesehen (Fig. 4), welche entsprechende Einschnitte od. dgl. aufweisen können. Es ist auch möglich, Aufnahmeleisten mittels Laschen 15 an einer Profilsäule 1 anzuordnen, an denen Stützarme 14 mittels Schrauben 20 angeschraubt sind.

Die Laschen sind in ähnlicher Weise in den T-Nuten 10 der Profilsäule befestigt. Ebenso können Haltebügel 11 od. dgl. an der Außenseite der Profilsäulen 1 angeordnet werden. An ihren Enden weisen die Profilsäulen 1 Einsätze 2 auf, mit denen sie auf entsprechende Zapfen einer Transportplatte aufsteckbar oder aber übereinander stapelbar sind. Die die T-förmigen Nuten 10 bildenden Stege 7 können je nach Bedarf an einer, zwei, drei oder vier Seiten der Hohlkastenrohre der Profilsäulen 1 angeordnet sein, je nachdem, wo noch Anschlußprofile 12 angeschlossen werden müssen. Die Profilsäulen 1 werden zweckmäßigerweise als Aluminium-Strangpreßprofile ausgebildet, wobei die Gleitstücke 4 aus härterem Material bestehen als die Profile 1, um eine entsprechende Verformung der Rippen 19 und 9 zu gewährleisten.

## Patentansprüche

1. Transportgestell für Karosseriebestandteile (21) od. dgl. Blechstanzteile, mit von einem Bodenrahmen hochstehenden Profilsäulen (1), die mit Querprofilen (12) und zwischen gegenüberliegenden Querprofilen angebrachten Aufnahmeleisten (17) mit Auflagen (18) zum Einsetzen der Karosseriebestandteile verbunden sind, dadurch gekennzeichnet, daß die Profilsäulen (1) und die Querprofile (12) mindestens entlang einer Seitenfläche eine hinterschnittene Nut (10) aufweisen, ein darin verschiebbares Gleitstück (4) mit einem Anschlußprofil, wie Querprofil (12) oder Aufnahmeleisten (17), durch Verschraubung verbunden ist, wozu die in das Gleitstück (4) eingreifenden Schrauben (6) in an den Enden aber ausserhalb der Kontur des Anschlußprofiles vorgesehenen Profilplatten (3) gelagert sind.

2. Transportgestell nach Anspruch 1, dadurch gekennzeichnet, daß an den Profilsäulen (1) mittels Gleitstücken (4) Laschen (15) befestigt sind, an denen Arme (14) zur Halterung von Aufnahmeleisten (17) angeschraubt sind.

3. Transportgestell nach Anspruch 1 oder 2, dadurch gekennzeichnet, daß die Nuten (10) an den Profilen (1, 12) von nach außen abstehenden Stegen (7) mit einwärts gerichteten Schenkeln (11) gebildet sind.

4. Transportgestell nach einem der Ansprüche 1 bis 3, dadurch gekennzeichnet, daß an den Nuten-Schenkeln (11) scharfkantige, vorzugsweise im Querschnitt etwa dreieckige, den Gleitstücken (4) zugewandte Rippen (19) und an den Gleitstücken (4) ebenfalls dazu quer angeordnete scharfkantige Rippen (9) ausgebildet sind, die beim Anziehen der Schrauben (6) unter plastischer Verformung zusammenwirken.

5. Transportgestell nach einem der Ansprüche 1 bis 4, dadurch gekennzeichnet, daß die Gleitstücke (4) aus einem härteren Material, insbesondere aus einer Aluminiumlegierung, als die Profile (1, 12) bestehen.

## Claims

1. A framework for transporting bodywork components (21) or the like stamped sheet metal pieces, comprising profile columns (1) which stand up from a bottom frame and which are connected to transverse profile members (12) and mounting bars (17) disposed between oppositely arranged transverse profile members, with supports (18), for insertion of the bodywork components, characterised in that the profile columns (1) and the transverse profile members (12) have a groove (10) of undercut configuration at least along a side surface, and a slide member (4) which is slidable therein is connected by screw means to a connecting profile member such as a transverse profile member (12) or mounting bars (17), for which purpose the screws (6) which engage into the slide member (4) are mounted in profile plates (3) provided at the ends of but outside the contour of the connecting profile member.

2. A transportation framework according to claim 1 characterised in that plate portions (15) are secured to the profile columns (1) by means of slide members (4), arms (14) for holding mounting bars (17) being screwed to the plate portions (15).

3. A transportation framework according to claim 1 or claim 2 characterised in that the grooves (10) on the profile members (1, 12) are formed by outwardly projecting limb portions (7) with inwardly directed legs (11).

4. A transportation framework according to one of claims 1 to 3 characterised in that sharp-edged ribs (19) which are towards the slide members (4) and which are preferably approximately triangular in cross-section are provided on the legs (11) of the groove, and sharp-edged ribs (9) are also provided on the slide members (4), being arranged transversely with respect thereto, the ribs co-operating with plastic deformation when the screws (6) are tightened.

5. A transportation framework according to one of claims 1 to 4 characterised in that the slide members (4) are made of a harder material, in particular an aluminium alloy, than the profile members (1, 12).

**Revendications**

1. Cadre de transport pour des éléments (21) de carrosserie ou des pièces estampées en tôle similaires comprenant des colonnes profilées (1) érigées en hauteur sur un cadre de base, qui sont reliées par des profilés transversaux (12) et des bandes (17) de réception placées entre des profilés transversaux en regard, ainsi que des appuis (18) pour la mise en place des éléments de carrosserie, cadre caractérisé en ce que les colonnes profilées (1) et les profilés transversaux (12) présentent au moins le long d'une face latérale, une gorge (10) détalonnée, et en ce qu'un élément coulissant (4), mobile dans celle-ci avec un profilé de raccordement, tel qu'un profilé transversal (12) ou des bandes de réception (17), est relié par vissage, et, pour cette liaison, les vis (6) engagées dans l'élément coulissant (4) sont montées dans les plaques (3) profilées prévues aux extrémités en dehors du contour du profilé de raccordement.

2. Cadre de transport selon la revendication 1, caractérisé en ce que des attaches (15), sur lesquelles sont vissés des bras (14) pour la fixation des bandes (17) de réception, sont fixées sur les colonnes profilées (1) au moyen d'éléments coulissants (4).

3. Cadre de transport selon la revendication 1 ou 2, caractérisé en ce que les gorges (10) sont constituées sur les profilés (1, 12) par des barrettes (7) s'écartant vers l'extérieur et comportant des montants (11) dirigés en dedans.

4. Cadre de transport selon l'une des revendications 1 à 3, caractérisé en ce que sont constituées, sur les montants des gorges (11), des nervures (19) à arêtes vives, dont la section est, de préférence, sensiblement triangulaire et qui sont tournées vers les éléments coulissants (4), ainsi que, sur les éléments coulissants (4), des nervures (9) à arêtes vives disposées transversalement aux premières, lesquelles nervures s'accouplent et coopèrent, lors du serrage des vis (6), sous l'effet de la déformation plastique.

5. Cadre de transport selon l'une des revendications 1 à 4, caractérisé en ce que les éléments coulissants (4) sont constitués par une matière plus dure, notamment en alliage d'aluminium, que les profilés (1, 12).

# Fig. 1

# Fig. 2

## Fig. 3

# Fig. 4

EP 0 275 001 B1

## Fig. 5

EP 0 275 001 B1